(19) Europäisches Patentamt
European Patent Office
Office européen des brevets

(11) **EP 4 703 332 A1**

(12) **EUROPEAN PATENT APPLICATION**
published in accordance with Art. 153(4) EPC

(43) Date of publication:
**04.03.2026 Bulletin 2026/10**

(21) Application number: **24796944.7**

(22) Date of filing: **19.04.2024**

(51) International Patent Classification (IPC):
*C03C 27/12* (2006.01)     *B60J 1/00* (2006.01)
*B60J 1/02* (2006.01)     *C03C 17/34* (2006.01)

(52) Cooperative Patent Classification (CPC):
**B32B 17/00; B60J 1/00; B60J 1/02; C03C 17/34**

(86) International application number:
**PCT/JP2024/015622**

(87) International publication number:
**WO 2024/225197 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 JP 2023073497**

(71) Applicant: **AGC INC.**
**Chiyoda-ku,**
**Tokyo 1008405 (JP)**

(72) Inventor: **AOKI, Tokihiko**
**Tokyo 100-8405 (JP)**

(74) Representative: **TBK**
**Bavariaring 4-6**
**80336 München (DE)**

(54) **LAMINATED GLASS**

(57)     Provided is a laminated glass including: a curved first glass plate, a curved second glass plate, and an intermediate film located between the first glass plate and the second glass plate to bond the first glass plate and the second glass plate, the first glass plate including a third surface and a fourth surface, and the second glass plate includes a first surface and a second surface, the fourth surface being a surface of the first glass plate located on a side opposite to the intermediate film, the third surface being a surface of the first glass plate facing the intermediate film, the second surface being a surface of the second glass plate facing the intermediate film, the first surface being a surface of the second glass plate located on a side opposite to the intermediate film,
the laminated glass having: a coating film provided on the second surface, the third surface, or the fourth surface; a shielding layer provided closer to the first surface than the coating film; and an information transmission and reception area that is a region in which a first opening portion provided on the shielding layer and a second opening portion provided on the coating film overlap each other in a case where seen in a plan view, the coating film having a visible light reflectance of 10% or more in a case where visible light of P-polarized light enters at an incidence angle of 65 deg, in a case where seen in a plan view, a first end surface of the shielding layer that defines the first opening portion being located inside a second end surface of the coating film that defines the second opening portion, and in a case where seen in a plan view, the shortest distance d [mm] between the first end surface and the second end surface satisfying the following Equation (1): $d \geq 3.5 \times de+1$, $d \leq 10$ ... (1), here, de is an absolute value of a difference between an emissivity of the coating film and an emissivity of a single unit of a glass plate, on which the coating film is provided, in the first glass plate and the second glass plate.

FIG. 3

# Description

TECHNICAL FIELD

The present invention relates to a laminated glass.

BACKGROUND ART

In head-up displays (hereinafter referred to as HUDs), there is a technology that applies a coating film that reflects P-polarized light to a laminated glass, allowing the P-polarized light to enter, in order to improve brightness of a picture and ensure visibility even when wearing polarized sunglasses.

In addition, there is a technology to build a driver assistance system using information devices such as in-vehicle cameras. In this case, for example, an information transmission and reception area where an information device transmits and receives information is provided in an upper edge center portion of a laminated glass. Since high optical quality is required in the information transmission and reception area, it has been proposed not to provide a coating film in the information transmission and reception area.

Citation List

Patent Document

Patent Document 1: PCT International Publication No. 2022/122640

SUMMARY OF INVENTION

Technical Problem

Simply not providing the coating film in the information transmission and reception area will not achieve high optical quality. For example, if the glass plate and the coating film that constitute the laminated glass have different emissivity, when the glass plate is bent, perspective distortion occurs near an end portion of the coating film, which forms the information transmission and reception area, deteriorating the optical quality of the information transmission and reception area.

In consideration of the above-mentioned circumstances, the present invention is directed to reducing perspective distortion in an information transmission and reception area of a laminated glass.

Solution to Problem

A laminated glass according to an embodiment of the present disclosure is a laminated glass including: a curved first glass plate, a curved second glass plate, and an intermediate film located between the first glass plate and the second glass plate to bond the first glass plate and the second glass plate, wherein the first glass plate includes a third surface and a fourth surface, and the second glass plate includes a first surface and a second surface, the fourth surface is a surface of the first glass plate located on a side opposite to the intermediate film, the third surface is a surface of the first glass plate facing the intermediate film, the second surface is a surface of the second glass plate facing the intermediate film, the first surface is a surface of the second glass plate located on a side opposite to the intermediate film, the laminated glass having: a coating film provided on the second surface, the third surface, or the fourth surface; a shielding layer provided closer to the first surface than the coating film; and an information transmission and reception area that is a region in which a first opening portion provided on the shielding layer and a second opening portion provided on the coating film overlap each other in a case where seen in a plan view, the coating film having a visible light reflectance of 10% or more in a case where visible light of P-polarized light enters at an incidence angle of 65 deg, in a case where seen in a plan view, a first end surface of the shielding layer that defines the first opening portion is located inside a second end surface of the coating film that defines the second opening portion, and in a case where seen in a plan view, the shortest distance d [mm] between the first end surface and the second end surface satisfies the following Equation (1): $d \geq 3.5 \times de+1$, $d \leq 10$ ... (1), here, de is an absolute value of a difference between an emissivity of the coating film and an emissivity of a single unit of a glass plate, on which the coating film is provided, in the first glass plate and the second glass plate.

Advantageous Effects of Invention

According to the embodiment of the present disclosure, it is possible to reduce perspective distortion in the information transmission and reception area of the laminated glass even when the coating film that reflects P-polarized light is provided on the laminated glass.

BRIEF DESCRIPTION OF DRAWINGS

[FIG. 1] A schematic diagram showing a HUD system according to a first embodiment.
[FIG. 2] A view (Part 1) showing a laminated glass according to the first embodiment.
[FIG. 3] A view (Part 2) showing the laminated glass according to the first embodiment.
[FIG. 4] A view showing a laminated glass according to Variant 1 of the first embodiment.
[FIG. 5] A view showing a laminated glass according to Variant 2 of the first embodiment.
[FIG. 6] A view showing a laminated glass according to Variant 3 of the first embodiment.
[FIG. 7] A view showing a laminated glass according to Variant 4 of the first embodiment.
[FIG. 8] A view (Part 1) for describing examples and comparative examples.
[FIG. 9] A view (Part 2) for describing examples and comparative examples.
[FIG. 10] A view (Part 3) for describing examples and comparative examples.

DESCRIPTION OF EMBODIMENTS

Hereinafter, an embodiment of the present invention will be described with reference to the accompanying drawings. In each drawing, the same component will be designated by the same reference sign, and repeated description thereof may be omitted. In addition, in each drawing, some of the sizes and shapes may be exaggerated to make it easier to understand the contents of the present invention.

Further, a vehicle is typically an automobile, but also refers to any moving object that can be fitted with laminated glass, including trains, ships, and aircraft.

In addition, "in a case where seen in a plan view" refers to viewing an object from a direction of a normal line passing through the center of gravity of the object's main surface, and the shape seen in this way is referred to as a planar shape.

In addition, terms "upper" and "lower" refer to an upper side and a lower side when the laminated glass is attached to the vehicle.

In addition, a side of the outermost circumference of a predetermined member is referred to as "a circumferential edge," and a region with a width inscribed within "the circumferential edge" in the predetermined member is referred to as "a circumferential edge portion."

<First embodiment>

[HUD system]

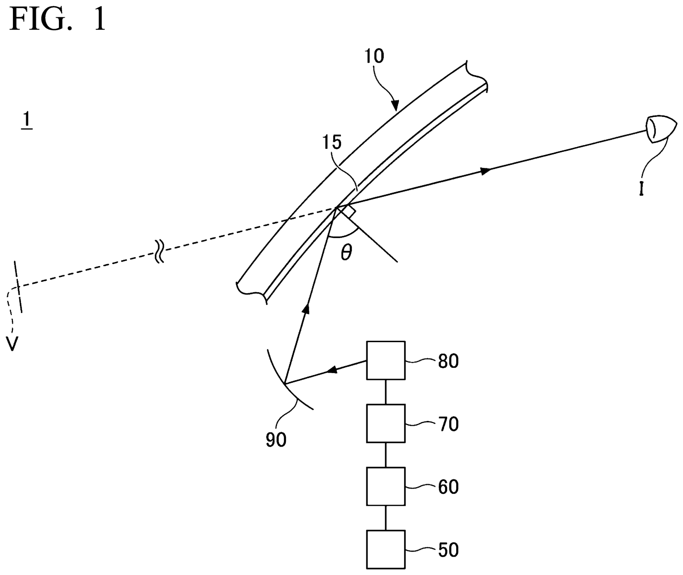

FIG. 1 is a schematic diagram showing a HUD system according to a first embodiment. A HUD system 1 shown in FIG. 1 has a laminated glass 10, a light source 50, a first optical system 60, an image display device 70, a second optical system 80, and a concave mirror 90. The HUD system 1 is a head-up display system for a vehicle configured to display a virtual image to outside of a vehicle from the laminated glass 10. Further, in the HUD system 1, the first optical system 60 and the second optical system 80 may be provided as needed.

The laminated glass 10 is, for example, a windshield for a vehicle, and visible light of P-polarized light enters from the inside of the vehicle. The laminated glass 10 has a coating film 15 in a region where the visible light of the P-polarized light reflected by the concave mirror 90 enters. The coating film 15 may be formed on the entire surface of the laminated glass 10, or may be formed on only a part of the laminated glass 10. The coating film 15 may be formed in at least a region where the P-polarized light from the light source 50 is irradiated, and edge of the coating film 15 may be formed near the outer circumferential portion of the laminated glass 10 or on or near the shielding layer to make the edges less noticeable.

The light source 50 is a light source that emits visible light of P-polarized light, for example, a light emitting diode, a laser, or the like. The light source 50 may include optical parts such as a polarizing plate, a lens, or the like, configured to convert S-polarized light into P-polarized light. The light source 50 is constituted by three light sources of, for example, a red light source, a green light source, and a blue light source.

The first optical system 60 is, for example, constituted by a prism, a lens, or the like, that combines light emitted from a plurality of light sources. The image display device 70 is an element that generates an intermediate image, for example, a liquid crystal display element, an organic light emitting element, or the like. The second optical system 80 is constituted by, for example, a lens, a reflective mirror, or the like. The concave mirror 90 is an optical part that reflects an intermediate image with a reflective surface having a predetermined curvature, and is located closest to the laminated glass 10 among the optical parts located on the optical path between the light source 50 and the laminated glass 10.

In the HUD system 1, the light emitted from the light source 50 passes through the first optical system 60 and reaches the image display device 70, on which an intermediate image is formed. The intermediate image formed on the image display device 70 is magnified by passing through the second optical system 80 and the concave mirror 90 and projected to the coating film 15 of the laminated glass 10. The intermediate image projected to the coating film 15 is mainly reflected by the coating film 15 to be guided to a viewpoint I of a passenger, and the passenger perceives an intermediate image in front of the laminated glass 10 as a virtual image V (HUD image). The passenger is, for example, a driver of the vehicle.

In FIG. 1, θ is an incidence angle in a case where visible light of the P-polarized light emitted from the light source 50 enters the coating film 15 via the predetermined optical system. The incidence angle θ may be 57 deg (Brewster's angle), may be greater than 57 deg, or may be smaller than 57 deg.

Further, the HUD system 1 has at least the laminated glass 10 and the light source 50, and other components are optional. The HUD system 1 may use a laser scanning method of scanning a laser beam using an optical scanning unit constituted by, for example, micro electro mechanical systems (MEMS), or the like.

[Laminated glass]

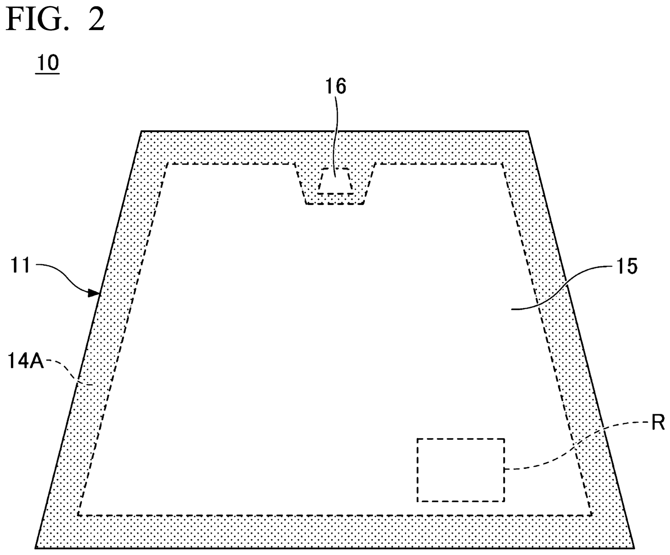

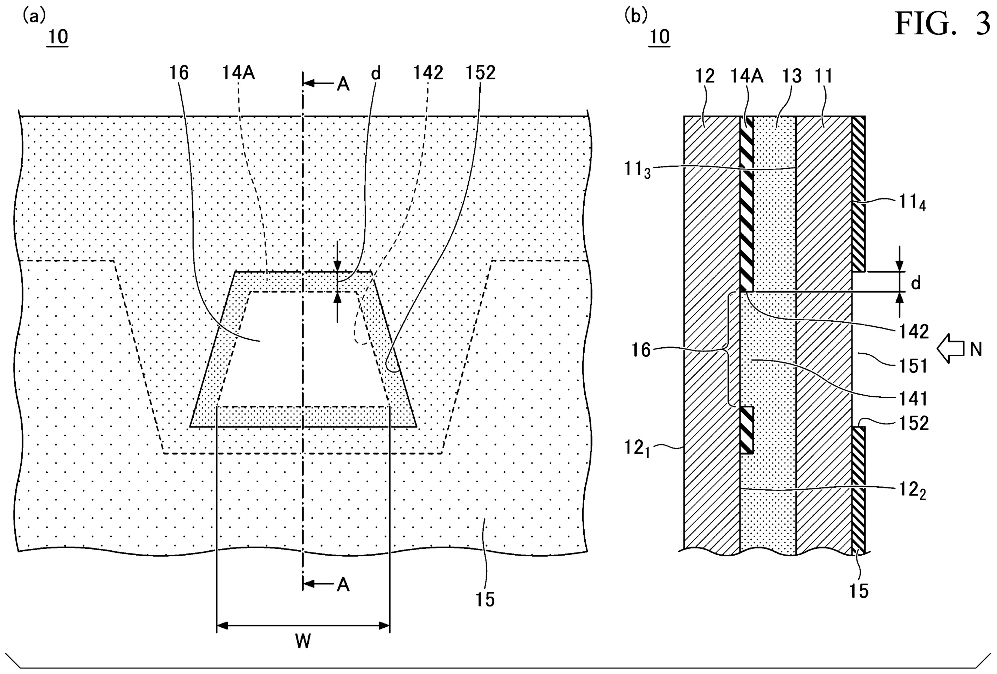

FIG. 2 is a view (Part 1) showing the laminated glass according to the first embodiment, schematically showing an aspect in which the laminated glass is seen from the inside toward the outside of the vehicle. FIG. 3 is a view (Part 2) showing the laminated glass according to the first embodiment. FIG. 3(a) is an enlarged view of an information transmission and reception area of the laminated glass of FIG. 2 and the vicinity thereof, and FIG. 3(b) is a cross-sectional view along line A-A in FIG. 3(a).

As shown in FIG. 2 and FIG. 3, the laminated glass 10 is a laminated glass for a vehicle including a first glass plate 11, a second glass plate 12, and an intermediate film 13 located between the first glass plate 11 and the second glass plate 12 and configured to bond the first glass plate 11 and the second glass plate 12. The laminated glass 10 further has a shielding layer 14A, the coating film 15, and an information transmission and reception area 16. The laminated glass 10 can be applied to, for example, a front glass of a vehicle, or the like.

The first glass plate 11 and the second glass plate 12 are bonded via the intermediate film 13. The first glass plate 11 is disposed on a first side, which is an inner side of the vehicle when the laminated glass 10 is attached to the vehicle, and the second glass plate 12 is disposed on a second side, which is an outer side of the vehicle when the laminated glass 10 is attached to the vehicle.

The laminated glass 10 has a double curved shape that is curved in both the vertical and horizontal directions when attached to the vehicle. The double curved shape is not limited to a shape curved in both the vertical and horizontal directions when attached to the vehicle, and also includes a shape curved in any two or more different directions. Alternatively, the laminated glass 10 may have a single curved shape, that is, curved in only one of the vertical and horizontal directions when attached to the vehicle. However, the single curved shape is not limited to a shape that is curved only in the vertical or horizontal direction when attached to the vehicle, and also includes a shape that is curved in arbitrary one direction only.

The laminated glass 10 is preferably curved to be convex toward the outside of the vehicle. That is, the second glass plate 12 is preferably curved to be convex toward the side opposite to the intermediate film 13, and the first glass plate 11 is preferably curved to be convex toward the intermediate film 13.

The first glass plate 11 is a vehicle-inside glass plate that becomes the inside (first side) of the vehicle when the laminated glass 10 is attached to the vehicle. The first glass plate 11 is curved. The first glass plate 11 includes a fourth surface $11_4$ located on a side opposite to the intermediate film 13, and a third surface $11_3$ facing the intermediate film 13. The first glass plate 11 includes an upper side, a lower side, and two lateral sides that connect the upper side and the lower side in a case where seen in a plan view.

The second glass plate 12 is a vehicle-outside glass plate that becomes the outside (second side) of the vehicle when the laminated glass 10 is attached to the vehicle. The second glass plate 12 is curved. The second glass plate 12 includes a second surface $12_2$ facing the intermediate film 13, and a first surface $12_1$ located of a side opposite to the intermediate film 13. The second glass plate 12 includes an upper side, a lower side, and two lateral sides that connect the upper side and the lower side in a case where seen in a plan view, like the first glass plate 11.

In the laminated glass 10, a minimum value of a radius of curvature is preferably 500 mm or more and 100000 mm or less. The first glass plate 11 and the second glass plate 12 may have the same radius of curvature, or may have different radiuses of curvature. When the first glass plate 11 and the second glass plate 12 have different radiuses of curvature, the radius of curvature of the first glass plate 11 is preferably smaller than that of the second glass plate 12.

The first glass plate 11 and the second glass plate 12 are a pair of glass plates facing each other, and the intermediate film 13 is located between the pair of glass plates. The first glass plate 11 and the second glass plate 12 are fixedly bonded while sandwiching the intermediate film 13. The intermediate film 13 is a film that bonds the first glass plate 11 and the second glass plate 12.

The outer circumferential side surface of the intermediate film 13 is preferably edge-treated. That is, the outer circumferential side surface of the intermediate film 13 is preferably treated not to greatly protrude from the outer circumferential side surfaces of the first glass plate 11 and the second glass plate 12. When the protrusion amount of the outer circumferential side surface of the intermediate film 13 from the outer circumferential side surfaces of the first glass plate 11 and the second glass plate 12 is 150 $\mu$m or less, it is preferable in that the appearance is not impaired. The first glass plate 11, the second glass plate 12, and the intermediate film 13 will be described below in detail.

The shielding layer 14A is an opaque layer, for example, provided in a strip shape along the circumferential edge portion of the laminated glass 10. The shielding layer 14A is provided closer to the first surface $12_1$ than the coating film 15. In the example of FIG. 2 and FIG. 3, the shielding layer 14A is provided on a circumferential edge portion of the second surface $12_2$ of the second glass plate 12.

The shielding layer may be provided on a circumferential edge portion of the fourth surface $11_4$ of the first glass plate 11, or may be provided on both a circumferential edge portion of the second surface $12_2$ of the second glass plate 12 and a circumferential edge portion of the fourth surface $11_4$ of the first glass plate 11. Even in these cases, at least one of the shielding layers is provided closer to the first surface $12_1$ than the coating film 15. By providing the shielding layer closer to the first surface $12_1$ than the coating film 15, the end portion of the coating film 15 becomes less visible from outside the vehicle.

The shielding layer 14A is, for example, an opaque colored ceramic layer, and although the color may be arbitrary, dark colors such as black, brown, gray, and navy blue are preferred, with black being more preferred. The shielding layer 14A can be formed, for example, by applying a ceramic color paste containing fusible glass frits containing black pigment onto a glass plate through screen printing or the like, and then baking it, but the method of forming the shielding layer 14A is not limited to this. The shielding layer 14A may be formed, for example, by applying organic ink containing black or dark color pigment onto a glass plate through screen printing or the like, and then drying it.

The shielding layer 14A may be a colored intermediate film or colored film having light blocking properties, a combination of a colored intermediate film and a colored ceramic layer, or a layer having a dimming function. The colored film may be integrated with an infrared reflective film or the like. The shielding layer 14A may be provided on the intermediate film 13. In this case, the material of the shielding layer 14A is not particularly limited as long as it reduces visible light transmittance, and examples thereof include dyes, inorganic pigments, organic pigments, and the like. Among these, inorganic pigments or organic pigments are preferred because they are less likely to fade over long-term use, and inorganic pigments are preferred because of their excellent light resistance. Examples of organic pigments include black pigments such as aniline black or the like and red pigments such as Alizarin Lake or the like. Examples of inorganic pigment include carbon-based pigments, or metal oxide pigments. Examples of pigments include black pigments such as carbon black, ivory black, mars black, peach black, lamp black, and magnetite triiron tetroxide; brown pigments such as umber, burnt umber, Yellow Walker, Van Dyke Brown, sienna, and burnt sienna; red pigments such as red iron oxide, molybdenum red, and cadmium red; orange pigments such as red lead yellow and chrome vermilion; blue pigments such as ultramarine, Prussian blue, cobalt blue, and cerulean blue; green pigments such as chromium oxide, viridian, emerald green, and cobalt green; yellow pigments such as lead yellow, cadmium yellow, yellow iron oxide, and titanium yellow; purple pigments such as manganese violet and mineral violet, and the like. These colorants can be used alone or in combination of two or more types.

A width of the shielding layer 14A in a case where seen in a plan view may be set as appropriate. Outside the information transmission and reception area, the width is for example, 10 mm or more and 250 mm or less, preferably 20 mm or ore and 220 mm or less, more preferably 30 mm or more and 200 mm or less. The presence of the opaque shielding layer 14A in the laminated glass 10 prevents deterioration by ultraviolet rays of the adhesive agent that holds the bracket for fixing the information transmission and reception device to the laminated glass 10, and the adhesive agent made of a resin such as urethane that holds the circumferential edge portion of the laminated glass 10 to the vehicle body, and also improves the appearance by making the adhesive portion invisible from outside the vehicle.

A HUD display region R for use in a head-up display is defined in a portion of the laminated glass 10. The HUD display region R is a region into which P-polarized light can enter from the side of the first glass plate 11. The HUD display region R is not limited to one location, and for example, in a case where seen in a plan view, it may be divided into multiple locations in the vertical direction within the laminated glass 10, or may be divided into multiple locations in the horizontal direction.

The HUD display region R reflects the projected image from inside the vehicle and displays information. The HUD display region R is a range in which light from the light source 50 is irradiated onto the laminated glass 10 when the HUD display position is moved in an eye box based on SAE J1757-2 (2018). The HUD display region R is located, for example, on the lower side of the fourth surface $11_4$ of the first glass plate 11.

In the HUD display region R and its neighboring region, the coating film 15 is disposed on the fourth surface $11_4$ of the first glass plate 11. When the coating film 15 is disposed on the fourth surface $11_4$, the brightness of the HUD image can be maximized. Further, this is just one example, and the coating film 15 can be provided on the second surface $12_2$ of the second glass plate 12, the third surface $11_3$ of the first glass plate 11, or the fourth surface $11_4$ of the first glass plate 11. For example, when comparing the case where the coating film 15 is disposed on the fourth surface $11_4$ of the first glass plate 11 with the case where the coating film 15 is disposed on the third surface $11_3$ of the first glass plate 11, the case where the coating film 15 is disposed on the fourth surface $11_4$ of the first glass plate 11 is superior in terms of reflectance and reflective properties at the fourth surface $11_4$. When the coating film 15 is disposed on the fourth surface $11_4$ of the first glass plate 11, almost all reflection occurs at the fourth surface $11_4$, so there is no interference between images due to reflections on multiple surfaces or double images due to optical path differences.

The coating film 15 may be disposed so as to cover the entire HUD display region R, and may be disposed over the entire laminated glass 10 (excluding the information transmission and reception area). In the example of FIG. 2 and FIG. 3, the coating film 15 is disposed on the entire laminated glass 10. When the coating film 15 is disposed on the entire the laminated glass 10, this is advantageous in that a boundary between the region where the coating film 15 is disposed and the surrounding region is not visible.

The coating film 15 is a film that reflects the visible light of the P-polarized light entering from the concave mirror 90 to the inside of the vehicle. The coating film 15 is transparent to visible light. A film thickness of the coating film 15 is, for example, 50 nm or more and 500 nm or less. The coating film 15 has a visible light reflectance Rva of 10% or more in a case where visible light of P-polarized light enters at an incidence angle of 65 deg.

Further, the visible light reflectance Rva was calculated by measuring the spectral reflectance as specified in ISO9050:2003 using P-polarized light in the visible wavelength as the incidence light at the incidence angle θ = 65 deg, and then calculating it according to the calculation method for visible light reflectance as specified in ISO9050:2003.

It is preferable that the coating film 15 has a reflectance of 10% or more at an incidence light wavelength of 1500 nm. Accordingly, the coating film 15 can reflect infrared rays from outside the vehicle, reducing the temperature rise inside the vehicle caused by infrared rays.

Examples of the coating film 15 include films with a laminated structure of high refractive index film/low refractive index film, infrared ray reflective films such as a laminated structure of a metal film such as silver and a dielectric film, and low-e films made of transparent conductive films such as ITO. Among these, a film with a laminated structure of high refractive index film/low refractive index film is preferred because it can maintain high P-polarized light reflectance. When the high refractive index film/low refractive index film has a two-layer structure, for example, the high refractive index film and the low refractive index film are laminated in this order on the fourth surface $11_4$ of the first glass plate 11. When the high refractive index film/low refractive index film has a three-layered structure or more, the high refractive index film and the low refractive index film are alternately laminated in arbitrary order on the fourth surface $11_4$ of the first glass plate 11. The thickness (geometric film thickness) of the coating film 15 is preferably 150 nm or more and 250 nm or less, more preferably 170 nm or more and 250 nm or less, further preferably 180 nm or more and 200 nm or less.

The refractive index of the high refractive index film is 1.8 or more, or 1.9 or more, or 2.0 or more, or 2.1 or more, and preferably 2.5 or less, at a wavelength of 550 nm. The refractive index of the low refractive index film is typically less than 1.8, or 1.7 or less, or 1.6 or less, and preferably 1.2 or more, at a wavelength of 550 nm.

Specifically, the high refractive index film preferably contains at least one of the following elements, for example, at least one of oxide of Zr, Nb and Sn, mixed oxide of Ti, Zr, Nb, Si, Sb, Sn, Zn and In, nitride of Si and Zr, and mixed nitride of Si and Zr. In addition, the low refractive index film preferably contains at least one of silicon oxide, silicon oxynitride, silicon oxycarbide, or a mixture thereof. Examples of the mixed oxides include mixed oxides of silicon and aluminum, and mixed oxides of silicon and zirconium.

A first layer of the high refractive index film is optionally constituted by one or a plurality of sublayers. The thickness (geometric film thickness) of the first layer of the high refractive index film is 50 nm or more and 100 nm or less, particularly preferably 60 nm or more and 80 nm or less. The first layer of the low refractive index film is optionally constituted by one or a plurality of sublayers.

The thickness (geometric film thickness) of the first layer of the low refractive index film is 70 nm or more and 160 nm or less, particularly preferably 100 nm or more and 140 nm or less.

The information transmission and reception area 16 is a region in which a first opening portion 141 provided in the shielding layer 14A and a second opening portion 151 provided in the coating film 15 overlap each other in a case where seen in a plan view. In description of the information transmission and reception area 16, "in a case where seen in a plan view" means viewing from the normal direction of the fourth surface $11_4$ exposed in the second opening portion 151, i.e., from the direction of arrow N in FIG. 3. Further, FIG. 3(a) is a plan view of the information transmission and reception area 16 and its vicinity, viewed from the direction of arrow N.

The information transmission and reception area 16 is provided, for example, in an upper side circumferential edge portion of the laminated glass 10. The information transmission and reception area 16 is a region where, for example, information devices that handle visible light, such as visible light cameras and illuminance sensors, and information devices that handle infrared light, such as light detection and ranging (LiDAR), transmit and/or receive information. That is, when the laminated glass 10 is installed in the vehicle, the information device can be disposed in the information transmission and reception area 16 inside the vehicle. In order to achieve high optical quality and enable good transmission and reception of information, the coating film 15 is not provided within the information transmission and reception area 16.

In a state in which the laminated glass 10 is attached to the vehicle, a maximum width of the information transmission and reception area 16 in the horizontal direction is preferably 200 mm or more. Accordingly, the information device will be able to obtain information from a wider angle. In addition, when the maximum width of the information transmission and reception area 16 in the horizontal direction is 200 mm or more, the reduction in perspective distortion of the information transmission and reception area 16 due to the effect of the present invention is even more remarkable. A maximum width of the information transmission and reception area 16 in the vertical direction is more preferably 70 mm or more, further preferably 100 mm or more. Accordingly, the information device will be able to obtain information from a wider angle. In addition, when the maximum width of the information transmission and reception area 16 in the vertical direction is 70 mm or more, the reduction in perspective distortion of the information transmission and reception area 16 due to the effect of the present invention is even more remarkable.

In a case where seen in a plan view, a first end surface 142 of the shielding layer 14A that defines the first opening portion 141 is located inside a second end surface 152 of the coating film 15 that defines the second opening portion 151. Further, in a case where seen in a plan view, the shortest distance d [mm] between the first end surface 142 and the second end surface 152 satisfies the following Equation (1). d ≥ 3.5×de+1, and d ≤ 10 ... (1), however, in Equation (1), de is an absolute value of a difference between an emissivity of the coating film 15 and an emissivity of a single unit of the glass plate, on which the coating film 15 is provided, in the first glass plate 11 and the second glass plate 12. In the example in FIG. 2 and FIG. 3, since the coating film 15 is provided on the first glass plate 11, de is an absolute value of a difference between an emissivity of the coating film 15 and an emissivity of the single unit of the first glass plate 11 (i.e., an emissivity of the first glass plate 11 before the coating film 15 is provided). Further, the shortest distance d is measured along a shape of the fourth surface $11_4$ of the first glass plate 11. It is preferable that de is 0.01 or more in order to obtain the effect of the present invention. When de is 0.05 or more, the effect of the present invention becomes more remarkable, and when de is 0.1 or more, the effect of the present invention becomes even more remarkable.

If the emissivity of the coating film 15 differs from that of the glass plate (here, the first glass plate 11) on which the coating film 15 is applied, when the coating film 15 is formed on the first glass plate 11 and then heated to bend the glass plate, a difference in temperature occurs depending on whether the coating film 15 is present or not, and the curvature of the glass changes at the boundary between the presence and absence of the coating film 15. The difference in the optical path when viewing regions with different curvatures results in perspective distortion. Specifically, in the region close to the second end surface 152 of the first glass plate 11 exposed inside the second opening portion 151 of the coating film 15, perspective distortion occurs according to the absolute value of the emissivity difference between the coating film 15 and the first glass plate 11, and this region does not meet high optical quality.

Here, as described above, the laminated glass 10 is designed so that when viewed in a plan view, the shortest distance d [mm] between the first end surface 142 and the second end surface 152 satisfies Equation (1). Accordingly, even if the absolute value of the emissivity difference between the coating film 15 and the first glass plate 11 increases and the region where perspective distortion is likely to occur becomes larger, the shortest distance d can be increased to conceal the region where the perspective distortion is likely to occur with the shielding layer 14A. For this reason, the perspective distortion in the information transmission and reception area 16 can be reduced, and thus, the information transmission and reception area 16 with high optical quality can be achieved. The reason for setting d ≤ 10 is that within this range, regions prone to perspective distortion can be sufficiently concealed by the shielding layer 14A. Further, Equation (1) was derived by the inventors based on the results of repeated various experiments.

The emissivity of the first glass plate **11** and the second glass plate 12 is, for example, about 0.8 or more and 0.9 or less. On the other hand, the emissivity of the coating film 15 is 0.35 or more. The emissivity of the coating film 15 is preferably 0.4 or more, more preferably 0.5 or more, 0.6 or more, 0.75 or more, further preferably 0.8 or more. Further, when the shielding layer 14A is a colored ceramic layer, the emissivity of the colored ceramic layer may be greater than that as the single unit of the first glass plate 11 and the second glass plate 12. The emissivity can be measured on the basis of EN673: 2011.

The absolute value of the difference between the emissivity of the coating film 15 and the glass plate on which the coating film 15 is provided becomes smaller, the perspective distortion in the information transmission and reception area 16 can be reduced. However, by satisfying Equation (1), perspective distortion in the information transmission and reception area 16 can be reduced even if the absolute value of the difference between the emissivity of the coating film 15 and the glass plate on which the coating film 15 is attached becomes large.

In general, in the HUD system having the coating film 15, the light source or the optical system is installed so that the incidence angle of the P-polarized light entering the coating film 15 is approximately 57 deg. However, in the HUD system having the coating film 15, because there are restrictions on the locations where light sources and optical systems can be installed inside the vehicle, the incidence angle θ may deviate from 57 deg.

Here, in the HUD display region R, the intermediate film 13 may have a wedge-shaped cross-sectional region whose thickness gradually increases from the lower side to the upper side of the fourth surface $11_4$ of the first glass plate 11 in a state in which the laminated glass 10 is attached to the vehicle. By irradiating the P-polarized light onto the wedge-shaped cross-section region of the intermediate film 13, the distance between the main image and the double image can be reduced, making them almost overlap each other even when the incidence angle θ deviates from 57 deg, making the double image less noticeable.

Further, the visibility of the double image also changes depending on the projection distance of the HUD image. The projection distance of the HUD image is preferably 2 m or more, more preferably 3 m or more, further preferably 5 m or more, particularly preferably 10 m or more. Here, the projection distance of the HUD image is a distance from a center of the eye box to a focal position of the virtual image V based on SAE J1757-2 (2018). A measurement method for the focal distance of the HUD is based on SAE J1757-2 (2018). As the projection distance of the HUD image increases, the double image becomes darker and the separation amount of the double image from the main image is reduced, making the double image less noticeable. In addition, increasing the projection distance of the HUD image improves the visibility of the HUD image because the HUD image moves closer to the driver's focal distance while driving.

Here, the first glass plate 11, the second glass plate 12, and the intermediate film 13 will be described in detail.

[Glass plate]

The first glass plate 11 and the second glass plate 12 may be made of inorganic glass or organic glass. Examples of the inorganic glass that can be used without particular limitation include soda lime glass, aluminosilicate glass, borosilicate glass, alkali-free glass, quartz glass, and the like. The second glass plate 12 located on the outside of the laminated glass 10 is preferably made of inorganic glass from the viewpoint of scratch resistance, and soda lime glass from the viewpoint of formability. When the first glass plate 11 and the second glass plate 12 are soda lime glass, clear glass, green glass containing a predetermined amount or more of iron, and dark green glass can be suitably used. In addition, glass that absorbs ultraviolet rays or infrared rays may be used, and although transparent glass is preferred, colored glass plates may also be used as long as they do not impair transparency.

The inorganic glass may be either untempered or tempered. The untempered glass is made by forming molten glass into a flat plate and slowly cooling it. The tempered glass is made by forming a compressive stress layer on the surface of the untempered glass. Further, in the case of the tempered glass, residual stress can be reduced by distributing the stress isotropically.

The tempered glass may be, for example, either physically tempered glass such as air-cooled tempered glass or chemically tempered glass. In the case of the physically tempered glass, for example, the glass surface can be strengthened by a process other than slow cooling, such as rapidly cooling a glass plate that has been uniformly heated during bending from a temperature near its softening point, by creating a compressive stress layer on the glass surface due to the temperature difference between the surface and the interior of the glass.

In the case of the chemically tempered glass, for example, after bending, the glass surface can be strengthened by generating compressive stress on the glass surface using an ion exchange method or the like.

Meanwhile, materials for organic glass include polycarbonate, for example, acrylic resins such as polymethyl methacrylate or the like, polyvinyl chloride, and transparent resins such as polystyrene or the like.

The first glass plate 11 and the second glass plate 12 are not limited to a trapezoidal or rectangular shape, but may be processed into various shapes and curvatures. The first glass plate 11 and the second glass plate 12 may be bent by gravity molding, press molding, roller molding, or the like. There are no particular limitations on the molding method for the first glass plate 11 and the second glass plate 12. For example, in the case of inorganic glass, glass plates molded by the float method or the like are preferred.

The thickness of the second glass plate 12 is preferably 1.1 mm or more and 3 mm or less at the thinnest portion. If the plate thickness of the second glass plate 12 is 1.1 mm or more, it will have sufficient strength to withstand flying stones, and if it is 3 mm or less, the mass of the laminated glass 10 will not be too large, which is preferable in terms of fuel efficiency of the vehicle. The plate thickness of the second glass plate 12 is more preferably 1.8 mm or more and 2.8 mm or less, further preferably 1.8 mm or more and 2.6 mm or less, further preferably 1.8 mm or more and 2.2 mm or less, further preferably 1.8 mm or more and 2.1 mm or less at the thinnest portion.

The plate thickness of the first glass plate 11 is preferably 0.3 mm or more and 2.3 mm or less. If the plate thickness of the first glass plate 11 is 0.3 mm or more, the handling properties are good, and if it is 2.3 mm or less, the mass is not too large.

In addition, when the plate thickness of the first glass plate 11 is not appropriate, if two pieces of glass with particularly deep curves are formed as the first glass plate 11 and the second glass plate 12, a mismatch in the shapes of the two pieces will occur, which will have a significant impact on the glass quality, such as residual stress after pressing.

However, by setting the plate thickness of the first glass plate 11 to 0.3 mm or more and 2.3 mm or less, glass quality such as residual stress or the like can be maintained. Setting the plate thickness of the first glass plate 11 to 0.3 mm or more and 2.3 mm or less is particularly effective in maintaining glass quality in deeply curved glass. The plate thickness of the first glass plate 11 is more preferably 0.5 mm or more and 2.2 mm or less, further preferably 0.7 mm or more and 2.1 mm or less. In this range, the above-mentioned effect becomes even more remarkable.

The outside of the first glass plate 11 and/or the second glass plate 12 may be provided with a coating having a function of repelling water or blocking ultraviolet rays or infrared rays, or a coating having low reflective and low radiation properties. In addition, the first glass plate 11 and/or the second glass plate 12 may be provided with a coating on the side in contact with the intermediate film 13 that blocks ultraviolet rays or infrared rays, has low radiation properties, absorbs visible light, or is colored.

When the first glass plate 11 and the second glass plate 12 are made of curved inorganic glass, the first glass plate 11 and the second glass plate 12 are bent after being formed by a float method or the like and before being bonded with the intermediate film 13. The bending is performed by softening the glass by heating. The heating temperature of the glass during bending may be controlled within a range of approximately 550°C to 700°C.

[Intermediate film]

Thermoplastic resins are often used for the intermediate film 13, for example, plasticized polyvinyl acetal resins, plasticized polyvinyl chloride resins, saturated polyester resins, plasticized saturated polyester resins, polyurethane resins, plasticized polyurethane resins, ethylene-vinyl acetate copolymer resins, ethylene-ethyl acrylate copolymer resins, cycloolefin polymer resins, ionomer resins, and other thermoplastic resins that have been used in the related art for this type of application. In addition, a resin composition containing a modified hydrogenated block copolymer described in Japanese Patent No. 6065221 can also be suitably used.

Among these, plasticized polyvinyl acetal resins are preferred because they offer an excellent balance of properties such as transparency, weather resistance, strength, adhesive strength, penetration resistance, impact energy absorption, moisture resistance, heat insulation, sound insulation, and the like. These thermoplastic resins may be used alone or in combination of two or more types. The term "plasticized" in the above-mentioned plasticized polyvinyl acetal resin means that it has been plasticized by adding a plasticizer. The same applies to other plasticized resins.

However, when a specific object is encapsulated in the intermediate film 13, the object may be deteriorated by certain plasticizers depending on the type of the encapsulated object, and in this case, it is preferable to use a resin that does not substantially contain such plasticizers. Examples of resins that do not contain plasticizers include ethylene-vinyl acetate copolymer (EVA) resins.

Examples of the polyvinyl acetal resin include polyvinyl formal resin obtained by reacting polyvinyl alcohol (PVA) with formaldehyde, polyvinyl acetal resin in the narrow sense obtained by reacting PVA with acetaldehyde, and polyvinyl butyral (PVB) resin obtained by reacting PVA with n-butylaldehyde, and particularly, PVB is particularly suitable because it has an excellent balance of properties such as transparency, weather resistance, strength, adhesive strength, penetration resistance, impact energy absorption, moisture resistance, heat insulation, sound insulation, and the like. Further, these polyvinyl acetal resins may be used alone or in combination of two or more types.

However, the material forming the intermediate film 13 is not limited to thermoplastic resin. In addition, the intermediate film 13 may contain functional particles such as infrared ray absorbers, ultraviolet ray absorbers, luminescent agents, and the like. In addition, the intermediate film 13 may have a colored portion referred to as a shade band. The coloring pigments used to form the colored portion are those that can be used for plastics, the amount added can be adjusted so that the visible light transmittance of the colored portion is 40% or less, and examples of the coloring pigments include organic coloring pigments such as azo, phthalocyanine, quinacridone, perylene, perinone, dioxazine, anthraquinone, and isoindolino, as well as inorganic coloring pigments such as oxide, hydroxide, sulfide, chromate, sulfate, carbonate, silicate, phosphate, arsenate, ferrocyanide, carbon, and metal powder. These coloring pigments may be used alone or in combination of two or more types.

The intermediate film 13 may have a plurality of layers. For example, the intermediate film 13 may include three or more layers. For example, if the intermediate film is made up of three or more layers and the shear modulus of any layer other than the outermost layers is made smaller than the shear modulus of the outermost layers by adjusting the plasticizer, etc., the sound insulation of the laminated glass 10 can be improved. In this case, the shear moduli of the layers of both sides may be the same or different.

The film thickness of the intermediate film 13 is preferably 0.5 mm at the thinnest portion. Further, when the intermediate film 13 has the plurality of layers, the film thickness of the intermediate film 13 is the sum of the film thicknesses of the layers. If the film thickness of the thinnest portion of the intermediate film 13 is 0.5 mm or more, the impact resistance required for laminated glass is sufficient. In addition, the film thickness of the intermediate film 13 is preferably 2 mm or less at the thickest portion. If the maximum film thickness of the intermediate film 13 is 2 mm or less, the mass of the laminated glass will not become too large. The maximum value of the film thickness of the intermediate film 13 is more preferably 1.5 mm or less, further preferably 1.2 mm or less.

In addition, when the intermediate film 13 has the plurality of layers, each layer included in the intermediate film 13 is preferably made of the same material, but may be made of different materials. However, from the viewpoint of adhesion between the first glass plate 11 and the second glass plate 12, or functional materials to be incorporated into the laminated glass 10, it is desirable to use the above-mentioned materials for 50% or more of the film thickness of the intermediate film 13.

To fabricate the intermediate film 13, for example, the above-mentioned resin material that will become the intermediate film is appropriately selected and extruded in a heated molten state using an extruder. The extrusion conditions such as an extrusion speed and the like of the extruder are set to be uniform. After that, the extruded resin film is stretched in an arbitrary direction as needed to give the upper and lower sides curvature to match the design of the laminated glass, for example, and the intermediate film 13 is completed.

[Laminated glass]

The total thickness of the laminated glass 10 is preferably 2.8 mm or more and 10 mm or less. If the total thickness of the laminated glass 10 is 2.8 mm or more, sufficient rigidity can be ensured. In addition, if the total thickness of the laminated glass 10 is 10 mm or less, sufficient transmittance can be obtained and haze can be reduced. The total thickness of the laminated glass 10 is preferably 7 mm or less, more preferably 6 mm or less, further preferably 5 mm or less.

On at least one side of the laminated glass 10, plate misalignment between the first glass plate 11 and the second glass plate 12 is preferably 1.5 mm or less, and more preferably 1 mm or less. Here, i.e., the plate misalignment between the first glass plate 11 and the second glass plate 12 is the amount of misalignment between the outer circumferential side surface of the first glass plate 11 and the outer circumferential side surface of the second glass plate 12 when viewed in a plan view.

It is preferable that, when the plate misalignment between the first glass plate 11 and the second glass plate 12 on at least one side of the laminated glass 10 is 1.5 mm or less, the appearance is not impaired. It is even more preferable that, when the plate misalignment between the first glass plate 11 and the second glass plate 12 on at least one side of the laminated glass 10 is 1.0 mm or less, the appearance is not impaired.

[Method of manufacturing laminated glass]

In manufacturing the laminated glass 10, first, the first glass plate 11 including the third surface $11_3$ and the fourth surface $11_4$, the intermediate film 13, and the second glass plate 12 including the first surface $12_1$ and the second surface $12_2$ are prepared. The plate thickness of the first glass plate 11 and the second glass plate 12 is constant. In addition, the film thickness of the intermediate film 13 is constant. Further, the first glass plate 11 or the second glass plate 12 having the wedge-shaped cross section, or the intermediate film 13 having the wedge-shaped cross section may be prepared.

Next, the coating film 15 is formed on the fourth surface $11_4$ of the first glass plate 11, and has a visible light reflectance of 10% or more in a case where visible light of P-polarized light is incident at an incidence angle of 65 deg, and has the second opening portion 151. The coating film 15 can be formed on the fourth surface $11_4$ of the first glass plate 11 by, for example, sputtering, CVD, or the like. The coating film 15 is formed over the entire fourth surface $11_4$ of the first glass plate 11 except for the second opening portion 151, for example, but may also be formed over only a portion of the fourth surface $11_4$ of the first glass plate 11. In addition, the coating film 15 may be formed on a surface other than the fourth surface $11_4$ of the first glass plate 11. For example, the coating film 15 may be formed on the second surface $12_2$ of the second glass plate 12 or the third surface $11_3$ of the first glass plate 11. In addition, the coating film 15 may be formed on a large piece of glass, and then the glass may be cut to prepare the first glass plate 11 on which the coating film 15 is formed.

Next, the shielding layer 14A having the first opening portion 141 is formed on the second surface $12_2$ of the second glass plate 12. When the shielding layer 14A is the colored ceramic layer, for example, the layer can be formed by applying a ceramic color paste to the second surface $12_2$ of the second glass plate 12 by screen printing or the like, and then baking it. The colored ceramic layer may be formed on the fourth surface $11_4$ of the first glass plate 11.

Next, after the process of forming the coating film 15 and the shielding layer 14A, the first glass plate 11 and the second glass plate 12 are bent. The first glass plate 11 and the second glass plate 12 can be bent by, for example, a pressing method. Specifically, a mold with concave and convex shapes that match the final shape of the laminated glass 10 is prepared, and the first glass plate 11 and the second glass plate 12 are each heated to a predetermined temperature to soften them, and then the mold is used to press and bend the first glass plate 11 and the second glass plate 12. Further, the first glass plate 11 and the second glass plate 12 may be bent using a gravity molding method, a roller molding method, or the like.

Further, in the laminated glass 10, the difference in plate thickness between the first glass plate 11 and the second glass plate 12 is preferably 0.3 mm or less, and more preferably 0.2 mm or less. It is particularly preferable that the plate thickness of the first glass plate 11 and the second glass plate 12 are the same. The smaller the difference in plate thickness between the first glass plate 11 and the second glass plate 12, the more similar their behaviors during bending become, thereby reducing perspective distortion.

Next, the intermediate film 13 extends as needed. Then, the intermediate film 13 is disposed between the third surface $11_3$ of the first glass plate 11 and the second surface $12_2$ of the second glass plate 12 and pressed together. For example, the intermediate film 13 is sandwiched between the first glass plate 11 and the second glass plate 12 so that the coating film 15 faces outwards to form a laminate. Then, for example, this laminate is placed in a rubber bag, rubber chamber, or resin bag, and bonded at a temperature controlled in the range of approximately 70°C to 110°C in a vacuum with a gauge pressure controlled in the range of -100 kPa to -65 kPa. The heating conditions, temperature conditions, and lamination methods are selected appropriately.

Further, for example, by carrying out a heat and pressure bonding process under controlled conditions of a temperature of 100°C to 150°C and an absolute pressure of 0.6 MPa to 1.5 MPa, the laminated glass 10 can be obtained with superior durability. However, in some cases, this heating and pressurizing process may not be used in order to simplify the process and in consideration of the properties of the material to be sealed in the laminated glass 10. The laminated glass 10 is completed through the above-mentioned processes.

In addition, the second glass plate 12 may be bent and shaped in advance, and the first glass plate 11, which is in a flat state, is curved to match the shape of the second glass plate 12 with the intermediate film 13 sandwiched therebetween, and then bonded to produce the laminated glass 10, a method known as cold bending.

In addition to the intermediate film 13, films or devices having functions such as heating wire, infrared ray reflection, light emission, power generation, dimming, touch panel, visible light reflection, scattering, decoration, and absorption may be present between the first glass plate 11 and the second glass plate 12, as long as the effect of the present application is not impaired. In addition, the surface of the laminated glass 10 may have a film with anti-fogging, water-repellent, heat-shielding, low-reflectivity, or other functions. In addition, the inner main surface of the first glass plate 11 and the inner main surface of the second glass plate 12 may have a film having a function of heat insulation, heat generation, etc.

<Variant>

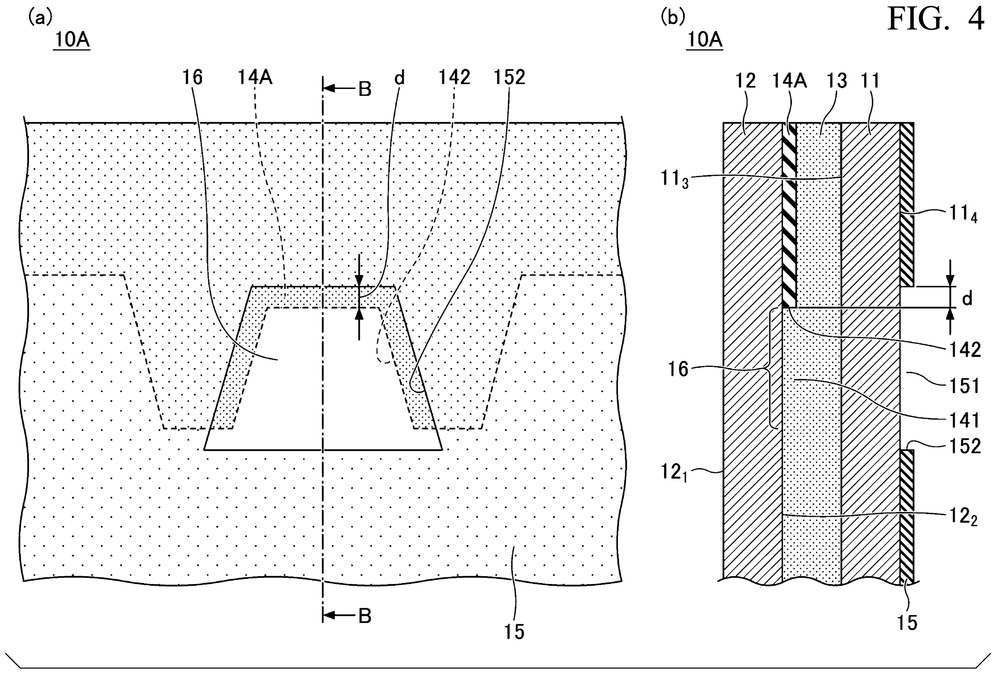

FIG. 4 is a view showing a laminated glass according to Variant 1 of the first embodiment. FIG. 4(a) is an enlarged view of an information transmission and reception area in the laminated glass and the vicinity thereof, and FIG. 4(b) is a cross-sectional view along line B-B in FIG. 4(a).

In the laminated glass 10 shown in FIG. 3, in a case where seen in a plan view, the entire information transmission and reception area 16 is surrounded by the shielding layer 14A, but the present invention is not limited to this. For example, like the laminated glass 10A shown in FIG. 4, in a case where seen in a plan view, a part of the information transmission and reception area 16 may be surrounded by the shielding layer 14A. In the example of FIG. 4, the information transmission and reception area 16 is surrounded by the shielding layer 14A except for the lower side.

Further, like the example of FIG. 4, when a discontinuous region exists in the first end surface 142 of the shielding layer 14A, the region enclosed by the first end surface 142 and an imaginary line connecting both end portions of the first end surface 142 in a case where seen in a plan view is defined as the information transmission and reception area 16.

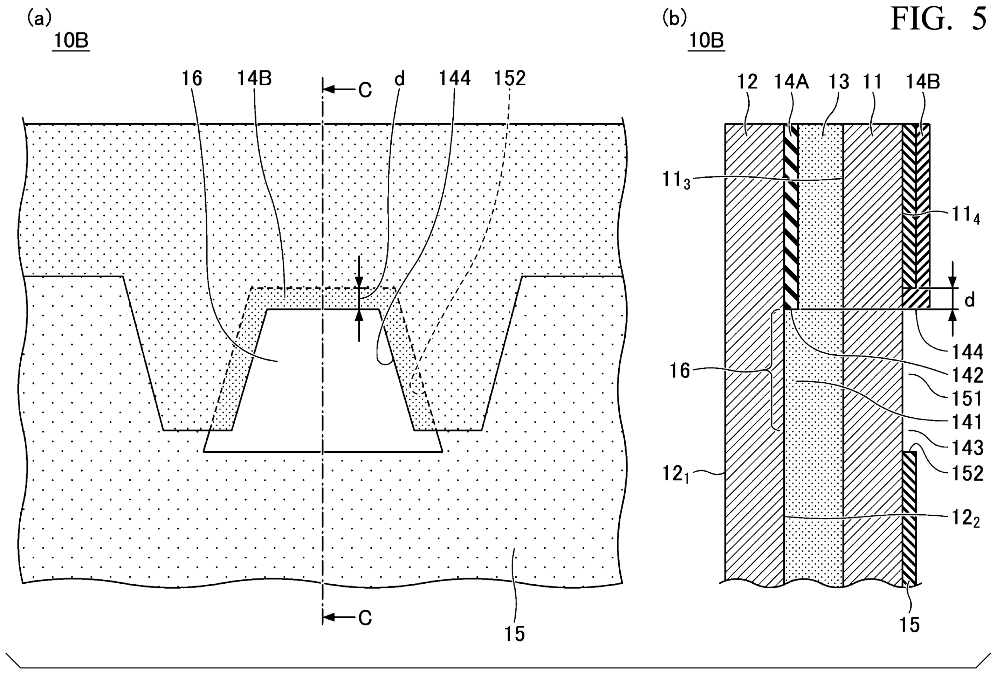

FIG. 5 is a view showing a laminated glass according to Variant 2 of the first embodiment. FIG. 5(a) is an enlarged view of an information transmission and reception area in the laminated glass and the vicinity thereof, and FIG. 5(b) is a cross-sectional view along line C-C in FIG. 5(a).

In the laminated glass 10 shown in FIG. 3, although an example in which the shielding layer 14A is provided on the second surface $12_2$ has been shown, the present invention is not limited to this. For example, like the laminated glass 10B shown in FIG. 5, a shielding layer 14B may be further provided on the fourth surface $11_4$. The shielding layer 14B is provided on, for example, a surface of the coating film 15 provided on the fourth surface $11_4$ opposite to the fourth surface $11_4$. In addition, the shielding layer 14B may cover the second end surface 152.

The shielding layer 14B is provided with a third opening portion 143. The shielding layer 14B has a third end surface 144 that defines the third opening portion 143. In the laminated glass 10B, the information transmission and reception area 16 is a region where the first opening portion 141 provided on the shielding layer 14A, the second opening portion 151 provided on the coating film 15 and the third opening portion 143 provided on the shielding layer 14B overlap each other in a case where seen in a plan view.

In a case where seen in a plan view, the first end surface 142 of the shielding layer 14A that defines the first opening portion 141 is located on an inner side the second end surface 152 of the coating film 15 that defines the second opening portion 151. Further, in a case where seen in a plan view, the shortest distance d [mm] between the first end surface 142 and the second end surface 152 satisfies the above-mentioned Equation (1).

In addition, in a case where seen in a plan view, the third end surface 144 of the shielding layer 14B that defines the third opening portion 143 is located on an inner side the second end surface 152 of the coating film 15 that defines the second opening portion 151. Further, in a case where seen in a plan view, the shortest distance d [mm] between the third end surface 144 and the second end surface 152 satisfies the above-mentioned Equation (1).

In the example of FIG. 5, the first end surface 142 and the third end surface 144 are positioned to overlap each other in a case where seen in a plan view, but are not limited to this. When the first end surface 142 and the third end surface 144 do not overlap each other in a case where seen in a plan view, any one or both the shortest distance between the first end surface 142 and the second end surface 152 and the shortest distance between the third end surface 144 and the second end surface 152 in a case where seen in a plan view may satisfy Equation (1). Accordingly, since regions prone to perspective distortion can be concealed by the shielding layer 14A and/or the shielding layer 14B, perspective distortion in the information transmission and reception area 16 can be reduced. As a result, it is possible to realize the information transmission and reception area 16 that meets high optical quality. Further, the shielding layer 14A may not be provided, and only the shielding layer 14B may be provided.

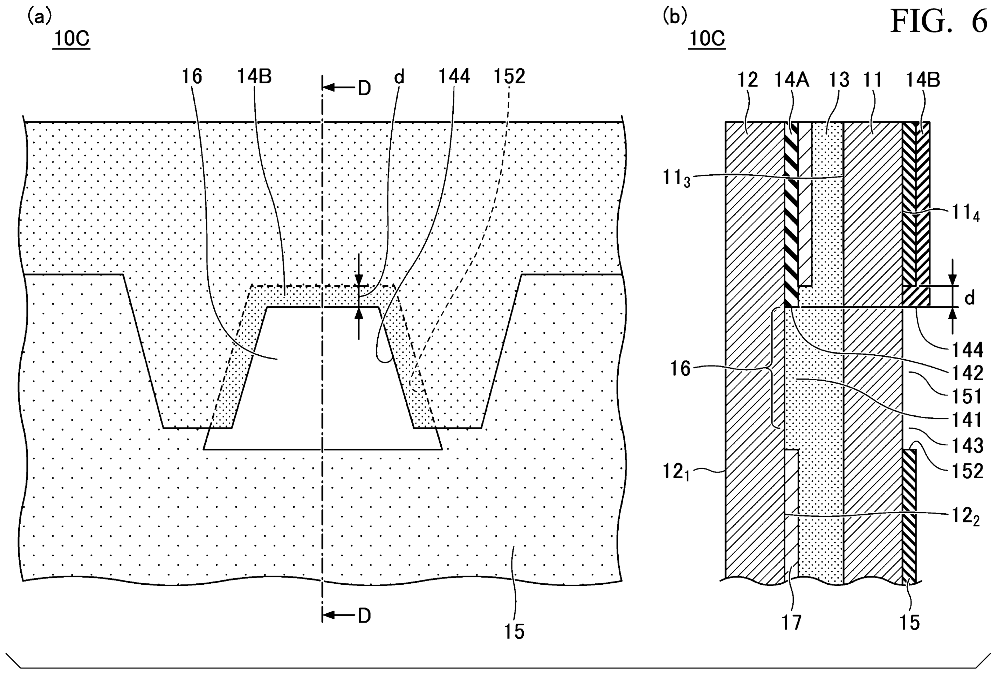

FIG. 6 is a view showing a laminated glass according to Variant 3 of the first embodiment. FIG. 6(a) is an enlarged view of an information transmission and reception area in the laminated glass and the vicinity thereof, and FIG. 6(b) is a cross-sectional view along line D-D in FIG. 6(a).

In the laminated glass 10 shown in FIG. 3, although an example in which no coating film is provided other than the coating film 15 has been shown, the present invention is not limited to this. A second coating film may be provided on the surfaces of the second

surface $12_2$, the third surface $11_3$, and the fourth surface $11_4$ on which the coating film 15 is not provided. For example, as in the laminated glass 10C shown in FIG. 6, the fourth surface $11_4$ may be provided with the coating film 15 and the second surface $12_2$ may be provided with a second coating film 17. The second coating film 17 is, for example, a film that reflects infrared rays. The second coating film 17 is preferably provided on the shielding layer 14A inside the vehicle. Accordingly, the second coating film 17 can be prevented from being visible from outside the vehicle.

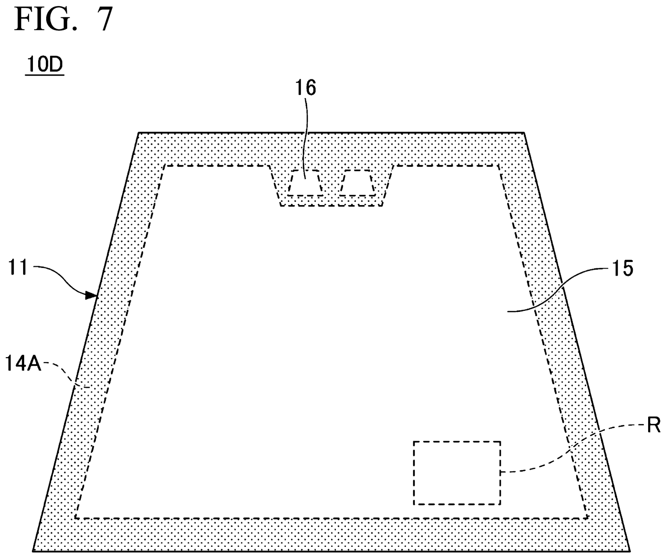

FIG. 7 is a view showing a laminated glass according to Variant 4 of the first embodiment, and shows a schematic view of the laminated glass as seen from inside the vehicle to the outside.

In the laminated glass 10 shown in FIG. 3, although an example having one information transmission and reception area 16 is shown, the present invention is not limited to this. For example, like the laminated glass 10D shown in FIG. 7, two information transmission and reception areas 16 may be provided. In this case, for example, the one information transmission and reception area 16 may be for an information device that handles visible light, and the other information transmission and reception area 16 may be for an information device that handles infrared light. The laminated glass 10D may have three or more information transmission and reception areas 16. In addition, two or more information transmission and reception areas 16 may be arranged in a longitudinal direction. In the case of the laminated glass shown in FIG. 7, it is sufficient to similarly satisfy Equation (1).

Further, in each of the above-mentioned examples, the shape of the information transmission and reception area 16 in a case where seen in a plan view is an isosceles trapezoid, but this is not limited to this, and the shape of the information transmission and reception area 16 in a case where seen in a plan view may be a rectangle, a sector, a semicircle, etc.

<Examples, Comparative examples>

Hereinafter, examples and comparative examples will be described, but the present invention is not limited to these examples in any way. Further, Example 1, Example 2, Example 5 to Example 9, and Example 13 to Example 16 are examples, and Example 3, Example 4, Example 10, Example 11, and Example 12 are comparative examples.

[Example 1]

Clear glass (FCLO manufactured by AGC Glass Europe) was prepared as a flat first glass plate A, which would become an inner plate (vehicle-inside glass plate) when laminated. In addition, green glass (FGNO manufactured by AGC Glass Europe) was prepared as a flat second glass plate B, which would become an outer plate (vehicle-outside glass plate). The dimensions of the first glass plate A and the second glass plate B were both 1560 mm × 966 mm × plate thickness 1.8 mm. The first glass plate A and the second glass plate B were not wedge-shaped in cross section, and the plate thickness was constant. In addition, as an intermediate film C, a PVB film (S-LEC Sound Acoustic Film manufactured by Sekisui Chemical Co., Ltd.) with a film thickness of 0.76 mm was prepared. The intermediate film C was not wedge-shaped in cross section, and the film thickness was constant.

Next, the fourth surface of the first glass plate A, which faces the inside of the vehicle, except for an opening portion D, was coated with a coating film (laminated film of $TiZrO_2/SiO_2$, geometric film thickness is 73.9 nm/99.5 nm) that reflects visible light of P-polarized light. Further, a colored ceramic layer with an opening portion E was formed as a shielding layer on the outer edge portion of the fourth surface of the first glass plate A, which faces the inside of the vehicle. In addition, a colored ceramic layer with an opening portion F was formed as a shielding layer on the outer edge portion of the second surface of the second glass plate B, which faces the inside of the vehicle.

Next, a mold with concave and convex shapes that matched the final shape of the laminated glass was prepared, and the first glass plate A and the second glass plate B were each heated to 600°C to soften them. Then, the plates were pressed using this mold to bend the first glass plate A and the second glass plate B.

Next, a laminate was prepared by sandwiching the intermediate film C between the curved first glass plate A and the curved second glass plate B, and the laminate was bonded at a temperature controlled in the range of approximately 70°C to 110°C in a vacuum controlled at a gauge pressure in the range of -100 kPa to -65 kPa. Further, the laminated glass was fabricated by a heating and pressing process under controlled conditions of a temperature of 100 to 150°C and an absolute pressure of 0.6 to 1.5 MPa.

In the laminated glass, an information transmission and reception area G was formed where the opening portion D, the opening portion E, and the opening portion F overlapped in a case where seen in a plan view. The information transmission and reception area G was formed in a shape (open) surrounded by a colored ceramic layer on all sides except the lower side, as shown in FIG. 4. The maximum width of the information transmission and reception area G in the horizontal direction was 150 mm. In addition, the emissivity of the first glass plate A was measured based on EN673: 2011 and was found to be 0.89, while the emissivity of the coating film was 0.88. In addition, a distance d was measured to be 1.5 mm.

[Example 2]

In Example 2, a laminated glass was fabricated in the same manner as in Example 1, except that the information transmission and reception area G was entirely surrounded (closed) by a colored ceramic layer, as shown in FIG. 3. The maximum width of the information transmission and reception area G in the horizontal direction was 150 mm. In addition, the emissivity of the first glass plate A was 0.89, and the emissivity of the coating film was 0.88. In addition, the distance d was 1.5 mm.

[Example 3]

In Example 3, a laminated glass was fabricated in the same manner as in Example 1, except that the size of the opening portion D of the coating film was changed. The maximum width of the information transmission and reception area G in the horizontal direction was 150 mm. In addition, the emissivity of the first glass plate A was 0.89, and the emissivity of the coating film was 0.88. In addition, the distance d was 0.8 mm.

[Example 4]

In Example 4, the laminated glass was fabricated in the same manner as in Example 1, except that the information transmission and reception area G was entirely surrounded by a colored ceramic layer (closed), as shown in FIG. 3, and the size of the opening portion D of the coating film was changed. The maximum width of the information transmission and reception area G in the horizontal direction was 150 mm. In addition, the emissivity of the first glass plate A was 0.89, and the emissivity of the coating film was 0.88. In addition, the distance d was 0.8 mm.

[Example 5]

In Example 5, a laminated glass was fabricated in the same manner as in Example 1, except that a colored ceramic layer was formed only on the second surface of the second glass plate B, which faces the inside of the vehicle. The maximum width of the information transmission and reception area G in the horizontal direction was 150 mm. In addition, the emissivity of the first glass plate A was 0.89, and the emissivity of the coating film was 0.88. In addition, the distance d was 1.5 mm.

[Example 6]

In Example 6, a laminated glass was produced in the same manner as in Example 1, except that a colored ceramic layer was formed only on the second surface of the second glass plate B, which faces the inside of the vehicle, and the information transmission and reception area G was made into a shape surrounded entirely by a colored ceramic layer (closed), as shown in FIG. 3. The maximum width of the information transmission and reception area G in the horizontal direction was 150 mm. In addition, the emissivity of the first glass plate A was 0.89, and the emissivity of the coating film was 0.88. In addition, the distance d was 1.5 mm.

[Example 7]

In Example 7, a laminated glass was fabricated in the same manner as in Example 1, except that the first glass plate A had a plate thickness of 1.6 mm, the second glass plate B had a plate thickness of 2.1 mm, and a colored ceramic layer was formed only on the second surface of the second glass plate B, which faces the inside of the vehicle. The maximum width of the information transmission and reception area G in the horizontal direction was 150 mm. In addition, the emissivity of the first glass plate A was 0.89, and the emissivity of the coating film was 0.88. In addition, the distance d was 1.5 mm.

[Example 8]

In Example 8, a laminated glass was fabricated in the same manner as in Example 1, except that the first glass plate A had a plate thickness of 1.6 mm, the second glass plate B had a plate thickness of 2.1 mm, a colored ceramic layer was formed only on the second surface of the second glass plate B, which faces the inside of the vehicle, and the information transmission and reception area G was made into a shape surrounded entirely by the colored ceramic layer (closed), as shown in FIG. 3. The maximum width of the information transmission and reception area G in the horizontal direction was 150 mm. In addition, the emissivity of the first glass plate A was 0.89, and the emissivity of the coating film was 0.88. In addition, the distance d was 1.5 mm.

[Example 9]

In Example 9, a laminated glass was fabricated in the same manner as in Example 1, except that the sizes of the opening portions D, E, and F were changed. The maximum width of the information transmission and reception area G in the horizontal direction was 200 mm. In addition, the emissivity of the first glass plate A was 0.89, and the emissivity of the coating film was 0.88. In addition, the distance d was 1.5 mm.

[Example 10]

In Example 10, a laminated glass was fabricated in the same manner as in Example 1, except that a colored ceramic layer was formed only on the second surface of the second glass plate B, which faces the inside of the vehicle, the information transmission and reception area G was made into a shape surrounded entirely by the colored ceramic layer (closed) as shown in FIG. 3, and further, the size of the opening portion D of the coating film was changed. The maximum width of the information transmission and reception area G in the horizontal direction was 150 mm. In addition, the emissivity of the first glass plate A was 0.89, and the emissivity of the coating film was 0.88. In addition, the distance d was 0.8 mm.

[Example 11]

In Example 11, a laminated glass was fabricated in the same manner as in Example 1, except that the first glass plate A had a plate thickness of 1.6 mm, the second glass plate B had a plate thickness of 2.1 mm, a colored ceramic layer was formed only on the second surface of the second glass plate B, which faces the inside of the vehicle, the information transmission and reception area G was made into a shape surrounded entirely by a colored ceramic layer (closed) as shown in FIG. 3, and further, the size of the opening portion D of the coating film was changed. The maximum width of the information transmission and reception area G in the horizontal direction was 150 mm. In addition, the emissivity of the first glass plate A was 0.89, and the emissivity of the coating film was 0.88. In addition, the distance d was 0.8 mm.

[Example 12]

In Example 12, a laminated glass was fabricated in the same manner as in Example 1, except that ITO was used as the coating film and the size of the opening portion D of the coating film was changed. The maximum width of the information transmission and reception area G in the horizontal direction was 150 mm. In addition, the emissivity of the first glass plate A was 0.89, and the emissivity of the coating film was 0.18. In addition, the distance d was 2 mm.

[Example 13]

In Example 13, a laminated glass was fabricated in the same manner as in Example 1, except that ITO was used as the coating film and the size of the opening portion D of the coating film was changed. The maximum width of the information transmission and reception area G in the horizontal direction was 150 mm. In addition, the emissivity of the first glass plate A was 0.89, and the emissivity of the coating film was 0.18. In addition, the distance d was 2.3 mm.

[Example 14]

In Example 14, a laminated glass was fabricated in the same manner as in Example 1, except that ITO was used as the coating film, the size of the opening portion D of the coating film was changed, and the information transmission and reception area G was made into a shape surrounded entirely by a colored ceramic layer (closed) as shown in FIG. 3. The maximum width of the information transmission and reception area G in the horizontal direction was 150 mm. In addition, the emissivity of the first glass plate A was 0.89, and the emissivity of the coating film was 0.18. In addition, the distance d was 2.5 mm.

[Example 15]

In Example 15, a laminated glass was fabricated in the same manner as in Example 1, except that the first glass plate A had a plate thickness of 1.6 mm, the second glass plate B had a plate thickness of 2.1 mm, ITO was coated as a coating film, the size of the opening portion D of the coating film was changed, and the information transmission and reception area G was made into a shape surrounded entirely by a colored ceramic layer (closed) as shown in FIG. 3. The maximum width of the information transmission and reception area G in the horizontal direction was 150 mm. In addition, the emissivity of the first glass plate A was 0.89, and the emissivity of the coating film was 0.18. In addition, the distance d was 2.5 mm.

[Example 16]

In Example 16, a laminated glass was fabricated in the same manner as in Example 1, except that the size of the opening portion D of the coating film was changed and a shielding layer was printed on the intermediate film instead of forming a colored ceramic layer on the second and fourth surfaces. The maximum width of the information transmission and reception area G in the horizontal direction was 150 mm. In addition, the emissivity of the first glass plate A was 0.89, and the emissivity of the coating film was 0.18. In addition, the distance d was 2.3 mm.

[Evaluation]

In each of the laminated glasses fabricated in Example 1 to Example 16, a distortion level of the information transmission and reception area G was evaluated. Specifically, each laminated glass fabricated in Examples 1 to 16 was placed on a horizontal plane so that the angle between its main surface and the horizontal plane was 25 deg, and the maximum value of the perspective distortion within the information transmission and reception area G was measured using a distortion tester, SCREENSCAN, manufactured by ISRA VISION Gmbh. The measurement results were divided into nine distortion levels according to the amount of distortion, as shown in Table 1, and a grade of B- or higher was considered to be acceptable. In addition, the value of "3.5×de+1" was calculated from the distance de in Example 1 to Example 16.

[Table 1]

| Evaluation | Amount of distortion [mdpt] |
|---|---|
| A+ | < 70 |
| A | < 85 |
| A- | < 100 |
| B+ | < 120 |
| B | <135 |
| B- | <150 |
| C+ | <170 |
| C | <185 |
| C- | <200 |

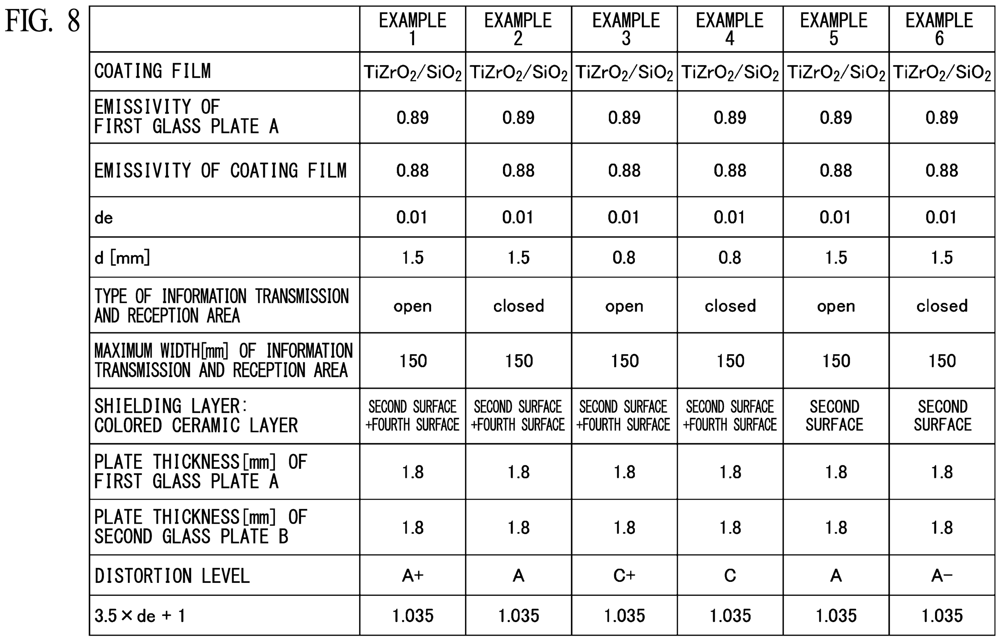

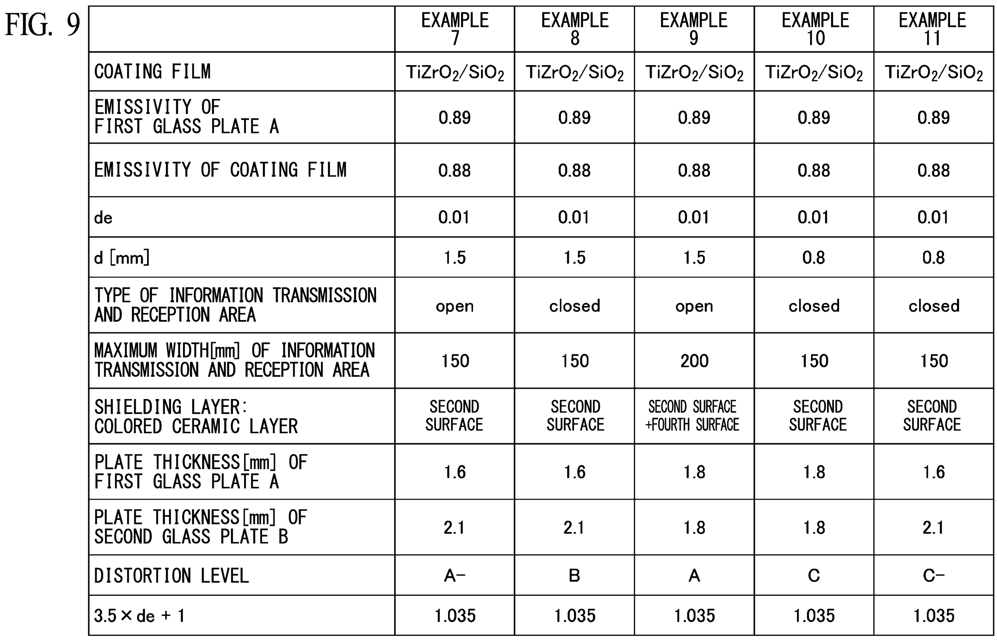

The conditions and evaluation results for Examples 1 to 6 are summarized in FIG. 8. In addition, the conditions and evaluation results for Examples 7 to 11 are summarized in FIG. 9. As shown in FIG. 8 and FIG. 9, the distortion levels of Examples 1, 2, 5 to 9 are B- or higher, and the distortion evaluation is acceptable. On the other hand, Examples 3, 4, 10, and 11 have distortion levels of less than B- and are evaluated as failing the distortion test. Meanwhile, in Example 1 to Example 11 shown in FIG. 8 and FIG. 9, comparing the value of d with the value of "$3.5 \times de+1$," Example 1, Example 2, Example 5 to Example 9 satisfy "$d \geq 3.5 \times de+1$, and $d \leq 10$ ...Equation (1)," but Example 3, Example 4, Example 10, and Example 11 do not satisfy Equation (1). In this way, it was found that the maximum value of perspective distortion can be kept low by making d and de satisfy the relationship of Equation (1).

In addition, comparing Example 1 with Example 2, Example 5 with Example 6, and Example 7 with Example 8, it is clear that when the information transmission and reception area is open, the maximum value of perspective distortion is kept lower than when it is closed. That is, the colored ceramic layer is also one of the factors that worsen perspective distortion, and from the perspective of keeping the maximum value of perspective distortion low, it is preferable when a part of the information transmission and reception area is not surrounded by the colored ceramic layer.

In addition, comparing Example 5 with Example 7, and Example 6 with Example 8, it can be said that from the viewpoint of keeping the maximum value of perspective distortion low, it is preferable for the plate thickness of the first glass plate A and the plate thickness of the second glass plate B to be the same. This is thought to be because when the plate thickness of the first glass plate A and the second glass plate B are the same, the behavior of both plates during bending becomes similar, resulting in roughly the same shape, making perspective distortion less likely to occur.

In addition, comparing Example 1 with Example 5, and Example 2 with Example 6, it can be said that it is preferable to provide a colored ceramic layer to both the second and fourth surfaces in order to keep the maximum value of perspective distortion low. This is thought to be because when a colored ceramic layer is provided on both the second and fourth surfaces, the behavior of the first glass plate A and the second glass plate B during bending becomes similar, resulting in roughly the same shape, making perspective distortion less likely to occur.

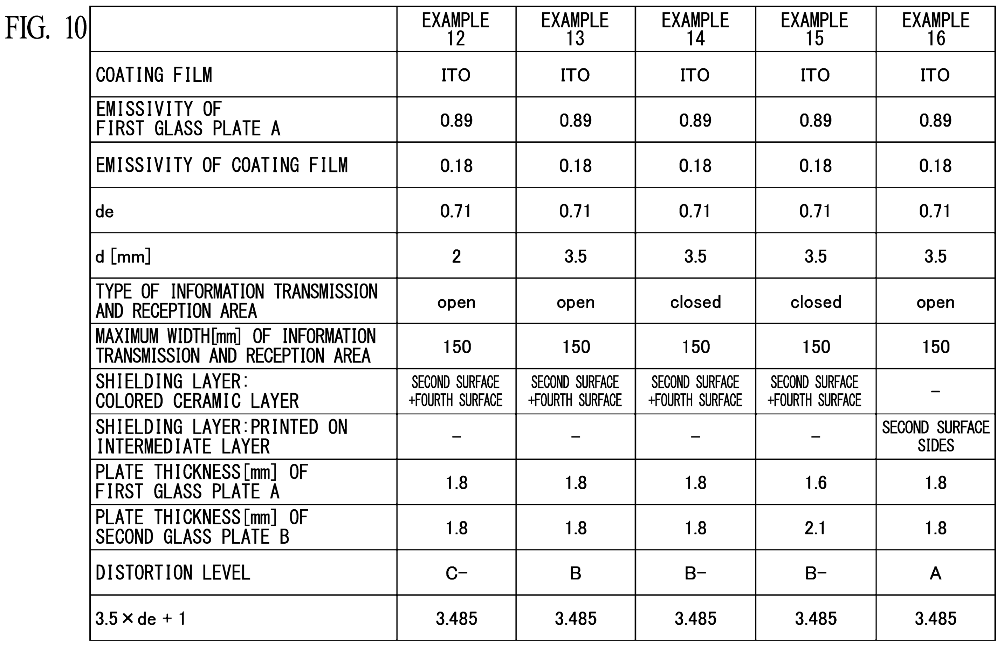

The conditions and evaluation results for Examples 12 to 16 are summarized in FIG. 10. As shown in FIG. 10, Examples 13 to 16 have a distortion level of B- or higher, and are evaluated to be acceptable. On the other hand, Example 12 has a distortion level of less than B- and is evaluated as failing distortion evaluation. Meanwhile, in Example 12 to Example 16 shown in FIG. 10, when comparing the value of d with the value of "$3.5 \times de+1$," Example 13 to Example 16 satisfy "$d \geq 3.5 \times de+1$ and $d \leq 10$ ...Equation (1)," but Example 12 does not satisfy Equation (1).

In this way, it was found that the maximum value of perspective distortion can be kept low by satisfying the relationship between d and de in Equation (1). This result is similar to that obtained from FIG. 8 and FIG. 9. That is, regardless of the type of coating film, it is considered that the maximum value of perspective distortion can be kept low by ensuring that d and de satisfy the relationship of Equation (1).

In addition, comparing Example 13 and Example 14, when the information transmission and reception area is open, the maximum value of perspective distortion is kept lower than when it is closed. That is, as in the cases of FIGS. 8 and 9, the colored ceramic layer is also one of the factors that worsen perspective distortion, and from the perspective of keeping the maximum value of perspective distortion low, it is preferable that a part of the information transmission and reception area is not surrounded by the colored ceramic layer. In Example 16, which did not have a colored ceramic layer and had a shielding layer printed on the intermediate film, the distortion level was considered to be particularly good because there was no effect of the colored ceramic layer.

Although the preferred embodiments have been described in detail above, the present invention is not limited to the above-mentioned embodiments, and various modifications and substitutions can be made to the above-mentioned embodiments without departing from the scope of the claims.

In addition to the above-mentioned embodiments, the present disclosure further includes the following Supplementary Statements:

(Supplementary Statement 1)

A laminated glass including: a curved first glass plate, a curved second glass plate, and an intermediate film located between the first glass plate and the second glass plate to bond the first glass plate and the second glass plate,

wherein the first glass plate includes a third surface and a fourth surface, and the second glass plate includes a first surface and a second surface,
the fourth surface is a surface of the first glass plate located on a side opposite to the intermediate film,
the third surface is a surface of the first glass plate facing the intermediate film, the second surface is a surface of the second glass plate facing the intermediate film, the first surface is a surface of the second glass plate located on a side opposite to the intermediate film,
the laminated glass having:

a coating film provided on the second surface, the third surface, or the fourth surface;
a shielding layer provided closer to the first surface than the coating film; and
an information transmission and reception area that is a region in which a first opening portion provided on the shielding layer and a second opening portion provided on the coating film overlap each other in a case where seen in a plan view,
the coating film has a visible light reflectance of 10% or more in a case where visible light of P-polarized light enters at an incidence angle of 65 deg,
in a case where seen in a plan view, a first end surface of the shielding layer that defines the first opening portion is located inside a second end surface of the coating film that defines the second opening portion, and
in a case where seen in a plan view, the shortest distance d [mm] between the first end surface and the second end surface satisfies the following Equation (1):

$$d \geq 3.5 \times de + 1, \; d \leq 10 \; ... \; (1),$$

here, de is an absolute value of a difference between an emissivity of the coating film and an emissivity of a single unit of a glass plate, on which the coating film is provided, in the first glass plate and the second glass plate.

(Supplementary Statement 2)

The laminated glass according to Supplementary Statement 1, wherein the shielding layer is a colored ceramic layer.

(Supplementary Statement 3)

The laminated glass according to Supplementary Statement 2, wherein the coating film is provided on the fourth surface, and the colored ceramic layer is provided on the second surface.

(Supplementary Statement 4)

The laminated glass according to Supplementary Statement 3, wherein the colored ceramic layer is also provided on a surface of the coating film provided on the fourth surface and opposite to the fourth surface.

(Supplementary Statement 5)

The laminated glass according to Supplementary Statement 4, wherein the colored ceramic layer provided on the opposite surface covers the second end surface.

(Supplementary Statement 6)

The laminated glass according to any one of Supplementary Statements 2 to 5, wherein an emissivity of the colored ceramic layer is greater than an emissivity of the first glass plate and the second glass plate as a single unit.

(Supplementary Statement 7)

The laminated glass according to any one of Supplementary Statements 1 to 6, wherein an emissivity of the coating film is 0.35 or more.

(Supplementary Statement 8)

The laminated glass according to any one of Supplementary Statements 1 to 7, wherein the coating film has a reflectance of 10% or more at 1500 nm.

(Supplementary Statement 9)

The laminated glass according to any one of Supplementary Statements 1 to 8, wherein a second coating film is provided on a surface, on which the coating film is not provided, in the second surface, the third surface, and the fourth surface.

(Supplementary Statement 10)

The laminated glass according to Supplementary Statement 9, wherein the second coating film is an infrared ray reflective film.

(Supplementary Statement 11)

The laminated glass according to Supplementary Statement 1, wherein the shielding layer is provided on the intermediate film.

(Supplementary Statement 12)

The laminated glass according to any one of Supplementary Statements 1 to 11, wherein the information transmission and reception area includes two or more information transmission and reception areas.

(Supplementary Statement 13)

The laminated glass according to any one of Supplementary Statements 1 to 12, wherein a maximum width of the information transmission and reception area in a horizontal direction is 200 mm or more in a state in which the laminated glass is attached to a vehicle.

(Supplementary Statement 14)

The laminated glass according to any one of Supplementary Statements 1 to 13, wherein a difference between plate thicknesses of the first glass plate and the second glass plate is 0.2 mm or less.

Priority is claimed on Japanese Patent Application No. 2023-073497, filed April 27, 2023, the content of which is incorporated herein by reference.

REFERENCE SIGNS LIST

1 HUD system
10, 10A, 10B, 10C, 10D Laminated glass
11 First glass plate
$11_3$ Third surface
$11_4$ Fourth surface
12 Second glass plate
$12_1$ First surface
$12_2$ Second surface
13 Intermediate film
14A, 14B Shielding layer
15 Coating film
16 Information transmission and reception area
50 Light source
60 First optical system
70 Image display device
80 Second optical system
90 Concave mirror
141 First opening portion
142 First end surface
143 Third opening portion
144 Third end surface
151 Second opening portion
152 Second end surface

**Claims**

1. A laminated glass comprising: a curved first glass plate, a curved second glass plate, and an intermediate film located between the first glass plate and the second glass plate to bond the first glass plate and the second glass plate,

wherein the first glass plate includes a third surface and a fourth surface, and the second glass plate includes a first surface and a second surface,
the fourth surface is a surface of the first glass plate located on a side opposite to the intermediate film, the third surface is a surface of the first glass plate facing the intermediate film, the second surface is a surface of the second glass plate facing the intermediate film, the first surface is a surface of the second glass plate located on a side opposite to the intermediate film, the laminated glass having:

a coating film provided on the second surface, the third surface, or the fourth surface;
a shielding layer provided closer to the first surface than the coating film; and
an information transmission and reception area that is a region in which a first opening portion provided on the shielding layer and a second opening portion provided on the coating film overlap each other in a case where seen in a plan view,
the coating film having a visible light reflectance of 10% or more in a case where visible light of P-polarized light enters at an incidence angle of 65 deg,
in a case where seen in a plan view, a first end surface of the shielding layer that defines the first opening portion being located inside a second end surface of the coating film that defines the second opening portion, and
in a case where seen in a plan view, the shortest distance d [mm] between the first end surface and the second end surface satisfying the following Equation (1):

$$d \geq 3.5 \times de + 1, \ d \leq 10 \ \ldots (1),$$

here, de is an absolute value of a difference between an emissivity of the coating film and an emissivity of a single unit of a glass plate, on which the coating film is provided, in the first glass plate and the second glass plate.

2. The laminated glass according to claim 1, wherein the shielding layer is a colored ceramic layer.

3. The laminated glass according to claim 2, wherein the coating film is provided on the fourth surface, and the colored ceramic layer is provided on the second surface.

4. The laminated glass according to claim 3, wherein the colored ceramic layer is also provided on a surface of the coating film provided on the fourth surface and opposite to the fourth surface.

5. The laminated glass according to claim 4, wherein the colored ceramic layer provided on the opposite surface covers the second end surface.

6. The laminated glass according to claim 2, wherein an emissivity of the colored ceramic layer is greater than an emissivity of the first glass plate and the second glass plate as a single unit.

7. The laminated glass according to any one of claims 1 to 6, wherein an emissivity of the coating film is 0.35 or more.

8. The laminated glass according to any one of claims 1 to 6, wherein the coating film has a reflectance of 10% or more at 1500 nm.

9. The laminated glass according to any one of claims 1 to 6, wherein a second coating film is provided on a surface, on which the coating film is not provided, in the second surface, the third surface, and the fourth surface.

10. The laminated glass according to claim 9, wherein the second coating film is an infrared ray reflective film.

11. The laminated glass according to claim 1, wherein the shielding layer is provided on the intermediate film.

12. The laminated glass according to any one of claims 1 to 6, wherein the information transmission and reception area includes two or more information transmission and reception areas.

13. The laminated glass according to any one of claims 1 to 6, wherein a maximum width of the information transmission and reception area in a horizontal direction is 200 mm or more in a state in which the laminated glass is attached to a vehicle.

14. The laminated glass according to any one of claims 1 to 6, wherein a difference between plate thicknesses of the first glass plate and the second glass plate is 0.2 mm or less.

FIG. 1

FIG. 2

10

(a) 10

(b) 10

FIG. 3

16  14A  ← A  d  142  152

12  14A  13  11

$11_3$

$11_4$

d

142

16

151

141

$12_1$

152

A

$12_2$

W

15

15

N

EP 4 703 332 A1

FIG. 4

EP 4 703 332 A1

# FIG. 5

(a) 10B

(b) 10B

(a)
10C

(b)
10C

FIG. 6

16  14B  D  d  144  152

12  14A  13  11  14B

$11_3$

$11_4$

d

144
142
151
141
143
152

16

$12_1$

$12_2$

17  15

15

EP 4 703 332 A1

FIG. 7

10D

FIG. 8

| | EXAMPLE 1 | EXAMPLE 2 | EXAMPLE 3 | EXAMPLE 4 | EXAMPLE 5 | EXAMPLE 6 |
|---|---|---|---|---|---|---|
| COATING FILM | $TiZrO_2/SiO_2$ | $TiZrO_2/SiO_2$ | $TiZrO_2/SiO_2$ | $TiZrO_2/SiO_2$ | $TiZrO_2/SiO_2$ | $TiZrO_2/SiO_2$ |
| EMISSIVITY OF FIRST GLASS PLATE A | 0.89 | 0.89 | 0.89 | 0.89 | 0.89 | 0.89 |
| EMISSIVITY OF COATING FILM | 0.88 | 0.88 | 0.88 | 0.88 | 0.88 | 0.88 |
| de | 0.01 | 0.01 | 0.01 | 0.01 | 0.01 | 0.01 |
| d [mm] | 1.5 | 1.5 | 0.8 | 0.8 | 1.5 | 1.5 |
| TYPE OF INFORMATION TRANSMISSION AND RECEPTION AREA | open | closed | open | closed | open | closed |
| MAXIMUM WIDTH[mm] OF INFORMATION TRANSMISSION AND RECEPTION AREA | 150 | 150 | 150 | 150 | 150 | 150 |
| SHIELDING LAYER: COLORED CERAMIC LAYER | SECOND SURFACE +FOURTH SURFACE | SECOND SURFACE +FOURTH SURFACE | SECOND SURFACE +FOURTH SURFACE | SECOND SURFACE +FOURTH SURFACE | SECOND SURFACE | SECOND SURFACE |
| PLATE THICKNESS[mm] OF FIRST GLASS PLATE A | 1.8 | 1.8 | 1.8 | 1.8 | 1.8 | 1.8 |
| PLATE THICKNESS[mm] OF SECOND GLASS PLATE B | 1.8 | 1.8 | 1.8 | 1.8 | 1.8 | 1.8 |
| DISTORTION LEVEL | A+ | A | C+ | C | A | A− |
| $3.5 \times de + 1$ | 1.035 | 1.035 | 1.035 | 1.035 | 1.035 | 1.035 |

EP 4 703 332 A1

FIG. 9

| | EXAMPLE 7 | EXAMPLE 8 | EXAMPLE 9 | EXAMPLE 10 | EXAMPLE 11 |
|---|---|---|---|---|---|
| COATING FILM | $TiZrO_2/SiO_2$ | $TiZrO_2/SiO_2$ | $TiZrO_2/SiO_2$ | $TiZrO_2/SiO_2$ | $TiZrO_2/SiO_2$ |
| EMISSIVITY OF FIRST GLASS PLATE A | 0.89 | 0.89 | 0.89 | 0.89 | 0.89 |
| EMISSIVITY OF COATING FILM | 0.88 | 0.88 | 0.88 | 0.88 | 0.88 |
| de | 0.01 | 0.01 | 0.01 | 0.01 | 0.01 |
| d [mm] | 1.5 | 1.5 | 1.5 | 0.8 | 0.8 |
| TYPE OF INFORMATION TRANSMISSION AND RECEPTION AREA | open | closed | open | closed | closed |
| MAXIMUM WIDTH [mm] OF INFORMATION TRANSMISSION AND RECEPTION AREA | 150 | 150 | 200 | 150 | 150 |
| SHIELDING LAYER: COLORED CERAMIC LAYER | SECOND SURFACE | SECOND SURFACE | SECOND SURFACE +FOURTH SURFACE | SECOND SURFACE | SECOND SURFACE |
| PLATE THICKNESS [mm] OF FIRST GLASS PLATE A | 1.6 | 1.6 | 1.8 | 1.8 | 1.6 |
| PLATE THICKNESS [mm] OF SECOND GLASS PLATE B | 2.1 | 2.1 | 1.8 | 1.8 | 2.1 |
| DISTORTION LEVEL | A− | B | A | C | C− |
| 3.5 × de + 1 | 1.035 | 1.035 | 1.035 | 1.035 | 1.035 |

EP 4 703 332 A1

FIG. 10

| | EXAMPLE 12 | EXAMPLE 13 | EXAMPLE 14 | EXAMPLE 15 | EXAMPLE 16 |
|---|---|---|---|---|---|
| COATING FILM | ITO | ITO | ITO | ITO | ITO |
| EMISSIVITY OF FIRST GLASS PLATE A | 0.89 | 0.89 | 0.89 | 0.89 | 0.89 |
| EMISSIVITY OF COATING FILM | 0.18 | 0.18 | 0.18 | 0.18 | 0.18 |
| de | 0.71 | 0.71 | 0.71 | 0.71 | 0.71 |
| d [mm] | 2 | 3.5 | 3.5 | 3.5 | 3.5 |
| TYPE OF INFORMATION TRANSMISSION AND RECEPTION AREA | open | open | closed | closed | open |
| MAXIMUM WIDTH[mm] OF INFORMATION TRANSMISSION AND RECEPTION AREA | 150 | 150 | 150 | 150 | 150 |
| SHIELDING LAYER: COLORED CERAMIC LAYER | SECOND SURFACE +FOURTH SURFACE | SECOND SURFACE +FOURTH SURFACE | SECOND SURFACE +FOURTH SURFACE | SECOND SURFACE +FOURTH SURFACE | – |
| SHIELDING LAYER:PRINTED ON INTERMEDIATE LAYER | – | – | – | – | SECOND SURFACE SIDES |
| PLATE THICKNESS[mm] OF FIRST GLASS PLATE A | 1.8 | 1.8 | 1.8 | 1.6 | 1.8 |
| PLATE THICKNESS[mm] OF SECOND GLASS PLATE B | 1.8 | 1.8 | 1.8 | 2.1 | 1.8 |
| DISTORTION LEVEL | C– | B | B– | B– | A |
| $3.5 \times de + 1$ | 3.485 | 3.485 | 3.485 | 3.485 | 3.485 |

## INTERNATIONAL SEARCH REPORT

| International application No. |
|---|
| **PCT/JP2024/015622** |

**A. CLASSIFICATION OF SUBJECT MATTER**

*C03C 27/12*(2006.01)i; *B60J 1/00*(2006.01)i; *B60J 1/02*(2006.01)i; *C03C 17/34*(2006.01)i
FI:  C03C27/12 N; C03C27/12 L; C03C17/34 Z; B60J1/00 H; B60J1/02 M

According to International Patent Classification (IPC) or to both national classification and IPC

**B. FIELDS SEARCHED**

Minimum documentation searched (classification system followed by classification symbols)

C03C27/12; B32B17/10; B60J1/00; B60J1/02; C03C17/00-17/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-196299 A (AGC INC.) 14 November 2019 (2019-11-14) | 1-14 |
| A | JP 2015-24929 A (ASAHI GLASS CO., LTD.) 05 February 2015 (2015-02-05) | 1-14 |
| P, A | WO 2023/068035 A1 (CENTRAL GLASS COMPANY, LIMITED) 27 April 2023 (2023-04-27) | 1-14 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/015622**

| Patent document cited in search report | | | Publication date (day/month/year) | Patent family member(s) | | | Publication date (day/month/year) |
|---|---|---|---|---|---|---|---|
| JP | 2019-196299 | A | 14 November 2019 | US | 2019/0337270 | A1 | |
| | | | | CN | 110435258 | A | |
| JP | 2015-24929 | A | 05 February 2015 | (Family: none) | | | |
| WO | 2023/068035 | A1 | 27 April 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022122640 A
- JP 6065221 B
- JP 2023073497 A